# FASCICULE DE BREVET EUROPEEN

(11) **EP 2 759 496 B1**
(45) Date de publication et mention de la délivrance du brevet: **06.07.2016**
(21) Numéro de dépôt: 14151409.1
(22) Date de dépôt: 16.01.2014
(51) Int. Cl.: B65G 45/10, B65G 45/12

(54) **Dispositif racleur pour bande transporteuse comprenant un dispositif de mise en vibration**
Bandfördererabstreifer mit einer Vibrationseinrichtung
Scraper for belt conveyor with a vibrating device

(30) Priorité: 28.01.2013 FR 1350700
(43) Date de publication de la demande: 30.07.2014
(73) Titulaire: Brunone, René, 27950 Saint Marcel (FR)
(72) Inventeur: Brunone, René, 27950 Saint Marcel (FR)
(74) Mandataire: Domenego, Bertrand

(56) Documents cités:
- EP-A1- 0 024 238
- FR-A- 1 221 777
- FR-A1- 2 590 243
- FR-A1- 2 976 930
- US-A- 2 885 069
- US-A- 3 288 275

## Description

L'invention concerne en général un dispositif racleur pour bande transporteuse circulant longitudinalement, le dispositif racleur étant du type comprenant une structure porteuse et au moins un organe racleur destiné à venir en contact avec la bande transporteuse.

L'invention concerne également le convoyeur correspondant.

Un dispositif racleur de ce type est décrit dans EP-A-0 891 934. Il est destiné à être positionné le long du brin de retour de la bande transporteuse de manière à la racler, de façon à la débarrasser des résidus de matériau transporté ayant adhéré à la bande.

Le document US 2,885,069 décrit un dispositif racleur selon le préamble de la revendication 1.

Cependant, les dispositifs racleurs existants ne donnent pas entière satisfaction. En effet, il a été observé que les résidus de matériau raclés avaient tendance à adhérer au ou à chaque organe racleur, réduisant l'efficacité du raclage.

Dans ce contexte, un objectif de l'invention est d'obtenir un dispositif racleur qui réduise l'adhérence des restes de matériau au ou à chaque organe racleur. D'autres objectifs sont d'avoir un encombrement du dispositif racleur réduit, et de faciliter la maintenance du dispositif racleur.

A cet effet, l'invention a pour objet un dispositif racleur selon la revendication 1.

Dans des modes de réalisation préférés de l'invention, le dispositif racleur présente également l'une ou plusieurs des caractéristiques suivantes, prise(s) isolément ou suivant toute(s) combinaison(s) techniquement possible(s) :
- le ou chaque dispositif de mise en vibration est un vibrateur électrique à balourds, de préférence un micro vibrateur électrique à balourds,
- la poutre transversale de chaque ensemble de support comprend un tronçon intérieur s'étendant entre l'âme et le montant et un tronçon extérieur s'étendant depuis le montant à l'opposée du tronçon intérieur, le ou chaque dispositif de mise en vibration étant fixé audit tronçon extérieur,
- la poutre transversale d'au moins un des ensembles de support porte une platine de fixation du ou de chaque dispositif de mise en vibration,
- la poutre transversale est liée à l'âme par une liaison démontable,
- les dispositifs de mise en vibration sont au moins deux, un premier dispositif de mise en vibration étant fixé à l'un des ensembles de support, le deuxième dispositif de mise en vibration étant fixé à l'autre ensemble de support,
- le ou chaque organe racleur est incurvé autour d'un axe sensiblement horizontal et transversal, vers l'aval,
- le ou chaque organe racleur comporte une plaque de support solidaire de la structure porteuse, une plaquette d'usure et une liaison démontable de la plaquette d'usure à la plaque de support, la plaquette d'usure comprenant une partie de fixation à la plaque de support, et une partie destinée à venir en contact avec la bande transporteuse.

L'invention a également pour objet, toujours selon le premier aspect, un ensemble comprenant un dispositif racleur tel que défini ci-dessus et un kit de plaquettes d'usure de rechange, le kit comprenant au moins une plaquette d'usure droite, une plaquette d'usure concave et une plaquette d'usure convexe.

L'invention a également pour objet, toujours selon le premier aspect, un convoyeur comprenant une bande transporteuse et un dispositif racleur tel que défini ci-dessus.

Selon un mode de réalisation préféré de l'invention, le convoyeur présente également la caractéristique suivante :
- il comprend un moteur électrique d'entraînement de la bande transporteuse, un premier circuit électrique d'alimentation du moteur d'entraînement, et un deuxième circuit électrique d'alimentation du ou de chaque dispositif de mise en vibration, et les premier et deuxième circuits électriques d'alimentation sont commandés par un commutateur commun au deux circuits électriques d'alimentation.

Il a également été observé que, indépendamment du problème de dépôt des restes de matériau sur le ou chaque organe de raclage, le raclage de la bande par les dispositifs racleurs existants n'était pas optimal.

Un autre objectif de l'invention est d'obtenir un dispositif racleur raclant mieux la bande transporteuse.

A cet effet, l'invention a pour objet, selon un second aspect indépendant du premier, un dispositif racleur du type précité, dans lequel le ou chaque organe racleur est incurvé autour d'un axe sensiblement horizontal et transversal, vers l'aval.

Dans des modes de réalisation préférés de l'invention, le dispositif racleur présente également l'une ou plusieurs des caractéristiques suivantes, prise(s) isolément ou suivant toute(s) combinaison(s) techniquement possible(s) :
- le ou chaque organe racleur comporte une plaque de support solidaire de la structure porteuse, une plaquette d'usure et une liaison démontable de la plaquette d'usure à la plaque de support, la plaquette d'usure étant incurvée autour d'un axe sensiblement horizontal et transversal, vers l'aval,
- la plaque de support est sensiblement plane,
- il comprend un matériau élastique surmoulé sur l'organe racleur et liant l'organe racleur à la structure porteuse, et le ou chaque organe racleur est délimité vers l'amont et l'aval par des côtés amont et aval, le côté amont de l'organe racleur étant couvert par le matériau élastique surmoulé,
- la structure porteuse comprend une âme de support, le matériau élastique étant surmoulé autour de l'âme de support,
- la structure porteuse comprend une âme de support dont est solidaire le ou chaque organe racleur, ladite âme de support étant incurvée autour d'un axe sensiblement vertical, vers l'amont,
- la structure porteuse comprend deux ensembles de support disposés transversalement de part et d'autre de l'âme de support, et deux liaisons démontables de deux parties d'extrémités de l'âme de support aux deux ensembles de support,
- chaque ensemble de support comprend un montant fixe et un mécanisme prévu pour déplacer l'âme de support en rotation par rapport au montant autour d'un axe sensiblement transversal, le mécanisme comprenant :
   - une poutre rigidement liée à l'âme de support ;
   - un feuillard lié à la poutre et s'enroulant autour de la poutre, le feuillard ayant deux parties d'extrémités opposées l'une à l'autre ;
   - deux liaisons liant chacune des deux parties d'extrémité du feuillard au montant correspondant, au moins une des deux liaisons étant réglable et étant agencée pour entrainer la poutre en rotation autour de l'axe transversal par rapport au montant par l'intermédiaire du feuillard ; et
- ledit mécanisme comprend un membre tubulaire lié à la poutre, et disposé autour de la poutre, et un organe élastique liant la poutre et le membre tubulaire l'un à l'autre, le feuillard sollicitant le membre tubulaire contre le montant, la poutre étant liée au montant seulement par l'intermédiaire du membre tubulaire et du feuillard.

L'invention a également pour objet, toujours selon ce deuxième aspect, un ensemble comprenant un dispositif racleur tel que défini ci-dessus et un kit de plaquettes d'usure de rechange, le kit de plaquettes d'usure de rechange comprenant au moins une plaquette d'usure droite, une plaquette d'usure concave et une plaquette d'usure convexe.

D'autres caractéristiques et avantages de l'invention ressortiront de la description détaillée qui en est donnée ci-dessous, à titre indicatif et nullement limitatif, en référence aux figures annexées, parmi lesquelles :
- la Figure 1 est une vue de dessus d'un convoyeur conforme à l'invention, selon une première variante,
- la Figure 2 est une vue de dessus d'un convoyeur conforme à l'invention, selon une deuxième variante,
- la Figure 3 est une vue en perspective d'un dispositif racleur du convoyeur de la Figure 2,
- la Figure 4 est une vue en coupe considérée suivant l'incidence des flèches III de la Figure 2,
- la Figure 5 est une vue en perspective, agrandie, d'une partie du dispositif racleur de la Figure 2, montrant plus particulièrement le mécanisme permettant de solliciter les organes racleurs contre la bande transporteuse,
- la Figure 6 est une vue schématique de côté du convoyeur de la Figure 2, et
- la Figure 7 est une vue schématique de côté des plaquettes d'usure d'un kit de plaquettes d'usure de rechange pour le dispositif racleur de la Figure 2.

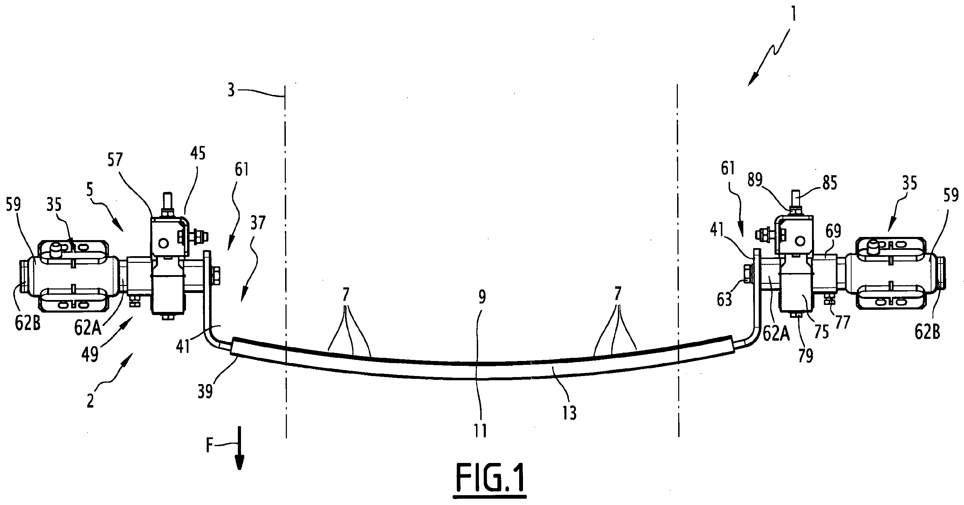

Le convoyeur 1, représenté sur les Figures 1, 2 et 6, comprend un dispositif racleur 2 et une bande transporteuse 3.

Le dispositif racleur 2 est destiné à racler une surface de la bande transporteuse 3. Il est destiné à éliminer les résidus de matériaux transportés se trouvant encore sur la bande transporteuse 3 après déchargement de celle-ci.

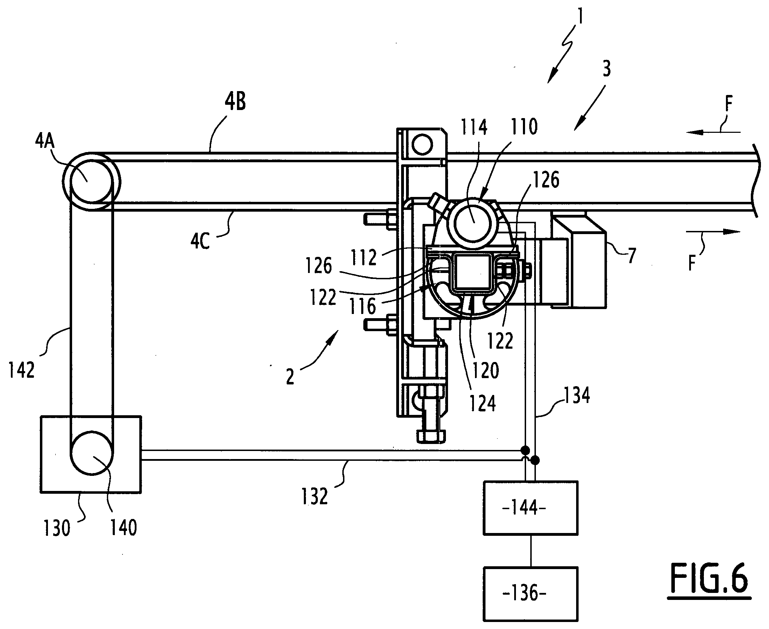

Typiquement, la bande transporteuse 3 est agencée en boucle entre deux rouleaux de retournement 4A (un seul d'entre eux est représenté sur la Figure 6), et comporte un brin de transport 4B et un brin de retour 4C. Le brin de transport 4B est chargé en matériau à transporter à proximité d'un premier rouleau de retournement (non représenté). Le matériau est déchargé de la bande transporteuse 3 à proximité du second rouleau de retournement 4A. Le dispositif racleur 2 est disposé de manière à racler le brin de retour 4C, immédiatement en aval du second rouleau de retournement 4A.

Dans la présente description les termes amont et aval sont entendus relativement au sens de déplacement de la bande transporteuse 3.

La face de la bande 3 recevant les matériaux est par exemple tournée vers le haut le long du brin de transport 4B, et est tournée vers le bas le long du brin de retour 4C, au moins au niveau du dispositif racleur 2. Le dispositif de racleur 2 est donc placé sous le brin de retour 4C de la bande transporteuse 3.

Il est à noter que le brin de retour 4C de la bande transporteuse peut être utilisé lui aussi pour transporter des matériaux.

Sur les Figures 1, 2 et 6, le sens de circulation de la bande transporteuse 3 de l'amont vers l'aval est représenté par les flèches F.

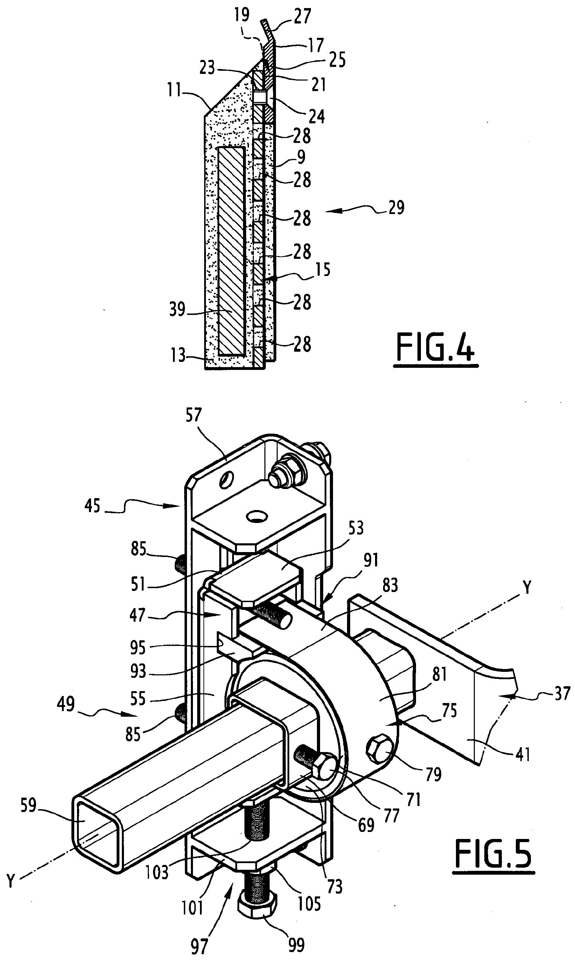

Le dispositif 2 comprend :
- une structure porteuse 5 ;
- plusieurs organes racleurs 7 délimités vers l'amont et l'aval par des côtés amont et aval 9 et 11 (Figure 4) ;
- un matériau élastique 13 surmoulé sur ces organes racleurs 7 et liant les organes racleurs 7 à la structure porteuse 5.

Chaque organe racleur 7 est incurvé vers l'aval autour d'un axe sensiblement horizontal et transversal. On notera que le terme « incurvé », tel qu'il est utilisé ici et dans la suite, est à comprendre aussi bien pour désigner un organe racleur qui présenterait une courbure continue de l'une de ses extrémités à l'autre extrémité, qu'un organe racleur présentant deux surfaces chacune sensiblement planes et formant un angle l'une par rapport à l'autre. Cela permet un meilleur raclage de la bande transporteuse 3.

Chaque organe racleur 7 comporte, comme visible sur la Figure 4, une plaque de support 15, une plaquette d'usure 17, et une liaison démontable 19 de la plaquette d'usure 17 à la plaque de support 15.

La plaque de support 15 est une plaque métallique, d'orientation sensiblement verticale et transversale. Elle est sensiblement plane.

La plaquette d'usure 17 est plaquée contre un côté de la plaque de support 15 tournée vers l'amont. Elle est plaquée contre une zone de bord supérieur de la plaque de support 15, référencée 21. La liaison démontable 19 comprend un orifice taraudé 23 ménagé dans la plaque 15 et une vis 24. La plaquette d'usure 17 comporte un orifice traversant placé en coïncidence avec l'orifice taraudé 23. La vis 24 est engagée à travers les deux orifices et est en prise avec l'orifice taraudé 23.

La plaquette d'usure 17 est incurvée vers l'aval autour d'un axe sensiblement horizontal et transversal. En particulier, dans l'exemple représenté, la plaquette d'usure 17 présente une partie inférieure 25, sensiblement plane, de fixation à la plaque 15, et une partie supérieure 27, sensiblement plane, au contact de la bande 3, les parties inférieure 25 et supérieure 27 étant dans des plans inclinés l'un par rapport à l'autre. Les parties inférieure 25 et supérieure 27 se joignent l'une à l'autre le long d'un axe sensiblement horizontal et transversal. La partie supérieure 27 prolonge la partie inférieure 25 vers le haut et dans la direction aval. L'angle entre les parties 25 et 27 vaut environ 170 °.

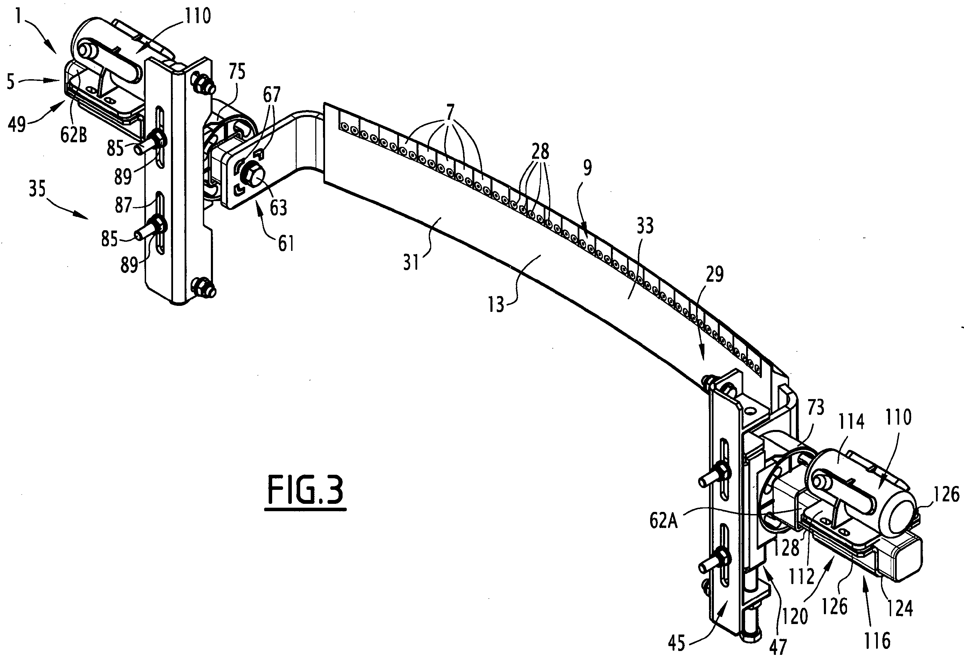

Le matériau élastique 13 est un polyuréthane. Il forme un bloc venu de moulage. Tous les organes racleurs 7 sont noyés dans le matériau élastique 13 et sont ainsi liés les uns aux autres par le matériau élastique 13. Plus précisément, comme visible sur la Figure 3, la plaque 15 de chacun des organes racleurs est noyée dans le matériau élastique 13. La plaquette d'usure 17 fait saillie vers le haut par rapport au matériau élastique 13. Le côté amont 11 de l'organe racleur est partiellement couvert par le matériau élastique 13 surmoulé. Le côté aval 11 est pratiquement entièrement couvert par le matériau élastique 13 surmoulé.

Du côté amont, le matériau élastique 13 couvre sensiblement toute la face amont de la plaque de support 15, à l'exception de la zone de bord supérieur 21 contre laquelle est plaquée la plaquette d'usure 17. Du côté aval, toute la plaque de support 15 est couverte par le matériau élastique 13. La plaque de support 15 présente des trous 28 permettant de solidariser l'une à l'autre les masses de matériau élastique 13 situées du côté amont et du côté aval de ladite plaque 15.

Du côté aval, la plaquette d'usure 17 n'est pas du tout couverte par le matériau élastique 13.

Le matériau élastique 13 définit vers l'amont une face amont libre 29, conformée pour faciliter l'évacuation des résidus détachés de la bande transporteuse par la plaquette d'usure 17.

En référence à la Figure 3, la structure porteuse 5 comprend deux ensembles de support 35 disposés de part et d'autre transversalement de la bande transporteuse, et une âme 37 de support des organes racleurs.

L'âme de support 37 comporte une partie centrale arquée 39, sensiblement transversale, prolongée par deux extrémités 41 d'orientation sensiblement longitudinale. L'âme 37 est une plaque métallique disposée sensiblement verticalement. La partie arquée 39 présente une concavité tournée vers l'amont. Elle est noyée dans le matériau élastique surmoulé 13. Comme le montre la Figure 4, elle est entièrement enveloppée par le matériau élastique 13.

Chaque ensemble de support 35 comporte, comme visible notamment sur la Figure 5, un montant fixe 45, un coulisseau 47 réglable en position verticalement par rapport au montant 45, et un mécanisme 49 prévu pour déplacer l'âme de support 37 en rotation par rapport au montant 45 autour d'un axe sensiblement transversal, référencé Y sur la Figure 5.

Le montant fixe 45 est par exemple un profilé en L d'orientation verticale, rigidement fixé à une structure reposant sur le sol. La structure n'est pas représentée.

Le coulisseau 47 est une pièce creuse de forme sensiblement parallélépipédique. Elle comporte un fond 51 et quatre parois 53, 55 rigidement fixées au fond et perpendiculaires à celui-ci. Les parois 53 sont parallèles et opposées l'une à l'autre. Les parois 55 sont parallèles et opposées l'une à l'autre, et sont perpendiculaires aux parois 53. Le fond 51 est plaqué contre une aile 57 du montant. Le coulisseau 47 est ouvert à l'opposé du fond 51.

Chaque ensemble de support 35 comprend encore une poutre creuse transversale 59, et une liaison démontable 61 de la poutre creuse à l'âme de support 37.

La poutre creuse 59 est à section sensiblement carrée. Elle comprend un tronçon intérieur 62A qui s'étend entre l'âme 37 et le montant 45, et un tronçon extérieur 62B qui s'étend depuis le montant 45 à l'opposée du tronçon intérieur 62A, vers l'extérieur du dispositif racleur 2.

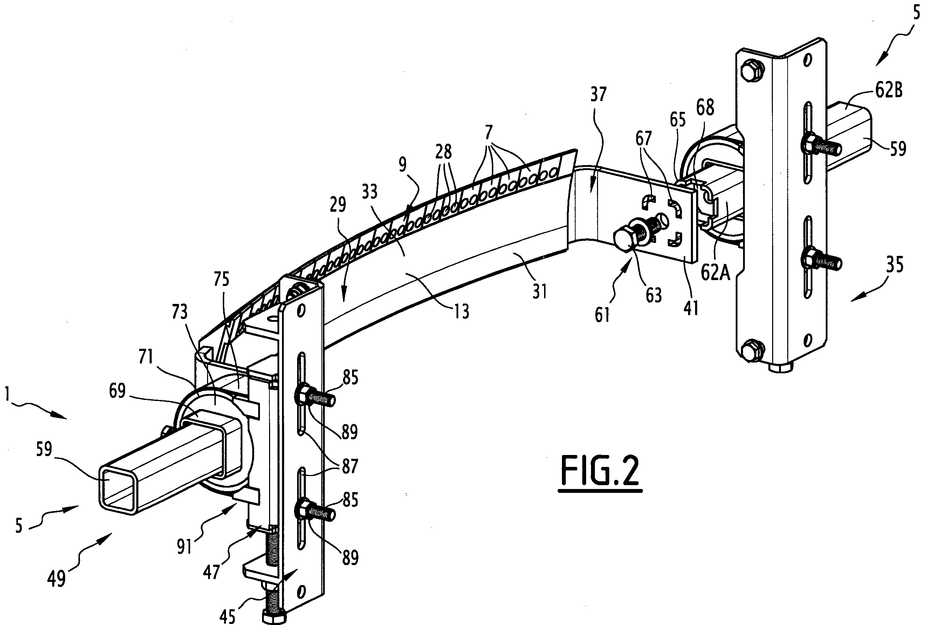

La liaison 61 lie une extrémité de la poutre 59 à la partie d'extrémité 41 de l'âme de support située du côté de l'ensemble de support correspondant. La liaison 61 comprend, comme visible sur la Figure 2, un ensemble vis- écrou 63, et des reliefs 65 ménagés sur la poutre 59 et engagés dans des orifices 67 ménagés sur l'âme de support. L'écrou 68 de l'ensemble vis-écrou 63 est constitué par une cloison interne de la poutre 59, pourvue d'un orifice taraudé. Les reliefs 65 sont par exemple ménagés sur le bord libre de la poutre 59 et font saillie vers la partie d'extrémités 41 de l'âme de support. Chacun présente par exemple une forme en L. Les orifices 67 sont eux aussi de forme en L et traversent l'âme sur toute son épaisseur. La liaison 61 solidarise en rotation autour de l'axe transversal la poutre 59 et l'âme de support 37.

Le mécanisme 49 comprend encore, comme visible sur la Figure 5, un membre central 69, un membre tubulaire 71 disposé autour du membre central 69, un organe élastique 73 liant le membre central et le membre tubulaire l'un à l'autre, et un feuillard 75 s'enroulant autour du membre tubulaire 71. Le membre central 69 est une bague métallique à section sensiblement carrée, enfilée autour de la poutre 59. Une vis 77 permet de bloquer en translation transversalement la poutre 59 à l'intérieur du membre 69. Il est ainsi possible d'ajuster la position de la poutre 59 suivant la direction transversale par rapport au membre central 69.

Le membre tubulaire 71 présente une forme générale cylindrique d'axe central transversal. L'organe élastique 73 est un bloc de caoutchouc, adhérisé vers l'intérieur sur une surface externe du membre central 69, et adhérisé vers l'extérieur sur une surface interne du membre tubulaire 71.

Le feuillard 65 est une bande souple d'un matériau métallique. Elle est rigidement fixée au membre tubulaire 71 par une vis 79. Le feuillard 75 présente une forme générale en U. Il présente une partie centrale 81 sensiblement semi-circulaire plaquée contre une surface externe du membre tubulaire 71, prolongé par deux parties d'extrémités 83, sensiblement planes et parallèles l'une à l'autre. La partie centrale 81 est plaquée contre une zone de la surface externe du membre tubulaire 71 opposée au montant fixe 45. Deux tiges filetées 85 sont soudées aux parties d'extrémités 83. Les tiges filetées 85 sont engagées dans des fentes 87 ménagées dans l'aile 57 du montant (figure 2). Les fentes 87 sont d'orientation verticale. Des écrous 89 sont vissés sur les tiges filetées 85. Les écrous 89 portent par l'intermédiaire de rondelles contre une face de l'aile 57 opposée au feuillard 75.

L'ensemble de support 35 comporte encore un berceau 91, en polyéthylène, destiné au support du membre tubulaire 71. Le berceau 91 est engagé à l'intérieur du coulisseau 47. Il est rigidement fixé par rapport au coulisseau 47, par exemple par des parties 93 engagées en force dans des créneaux 95 découpés dans les parois 55. Le berceau 91 présente vers le membre tubulaire une surface de support arquée, de courbure correspondant sensiblement à la courbure de la surface externe du membre tubulaire 71. Cette surface n'est pas visible sur la Figure 5.

Le berceau 91 est en un matériau choisi pour permettre le glissement du membre tubulaire 71 contre la surface de support.

Les parties d'extrémité 83 du feuillard sont plaquées contre ce berceau 91, l'une au-dessus et l'autre au-dessous du berceau 91. Le berceau 91 sert donc d'entretoise et maintient un écartement vertical déterminé entre les deux parties d'extrémité 83 du feuillard 75.

Le membre tubulaire 71 est sollicité contre cette surface de support par le feuillard 75. Ainsi, le membre tubulaire 71 est plaqué d'un côté contre la surface de support du berceau 91, et de l'autre côté par la partie centrale 81 du feuillard 75.

Enfin, de manière à permettre le réglage suivant la direction verticale de la position du coulisseau 47 par rapport au montant 45, l'ensemble de support comprend un dispositif de réglage 97. Ce dispositif 97 comprend une vis 99 et une plaque 101 solidaire du montant 45, sous le coulisseau 47. La plaque 101 est sensiblement horizontale et présente un orifice taraudé 103. La vis 99 s'étend verticalement. Elle est vissée dans l'orifice 103, et son extrémité vient porter sur et contre la paroi 53 du coulisseau. Ainsi, en vissant ou en dévissant la vis 99, il est possible d'ajuster la position verticale du coulisseau 47 par rapport au montant 45. Du fait de ce mouvement, les tiges filetées 85 se déplacent le long des fentes 87.

Le dispositif de réglage 97 comprend également un contre-écrou 105. Ce contre-écrou 105 est vissé sur la vis 99, en appui contre la face inférieure de la plaque 101, de façon à éviter un dérèglement de la position verticale du coulisseau 47.

De retour aux Figures 1 et 2, le dispositif racleur 2 comprend également deux dispositifs 110 de mise en vibration des organes racleurs 7.

Chaque dispositif de mise en vibration 110 comprend une plaque de fixation 112, et un carter cylindrique 114 solidaire de la plaque 112.

Chaque dispositif de mise en vibration 110 est en particulier un vibrateur électrique à balourds, de préférence un micro vibrateur électrique à balourds, de façon à limiter l'encombrement du dispositif racleur 2. De façon connue, le carter 114 abrite alors un moteur électrique (non représenté) adapté pour mettre en rotation un balourd (non représenté) lorsqu'il est alimenté en énergie électrique, de façon à faire vibrer le vibrateur.

Chaque dispositif de mise en vibration 110 est fixé à un ensemble de support 35 propre. Les dispositifs de mise en vibration 110 sont ainsi disposés de part et d'autre de l'âme de support 37. Cela permet d'améliorer l'amplitude de vibration des organes racleur 7 par rapport à une configuration dans laquelle il y aurait un unique dispositif de mise en vibration 110, fixé à un seul des ensembles de support 35.

En particulier, chaque dispositif de mise en vibration 110 est fixé au tronçon extérieur 62B de la poutre transversale 59 de l'ensemble de support propre 35. Ainsi, les vibrations du dispositif 110 sont directement transmises à l'âme 37 et de là aux organes racleurs 7, sans élément intermédiaire qui risquerait d'absorber une partie des vibrations. En outre, l'accès au dispositif de mise en vibration 110 est facilité, ce qui permet de simplifier sa maintenance. Enfin, la liaison démontable 61 permettant plusieurs positions de la poutre 59 relativement à l'âme 37, il est possible de faire facilement tourner la poutre 59 autour de son axe pour changer la position du dispositif de mise en vibration 110 relativement aux organes racleurs 7, de façon à améliorer son accessibilité.

La poutre transversale 59 porte une platine 116 de fixation du dispositif de mise en vibration 110. La platine 116 et le dispositif de mise en vibration 110 sont adaptés pour prendre la poutre 59 en étau lorsque le dispositif de mise en vibration 110 est fixé à la platine 116.

A cet effet, la platine 116 comprend un corps 120 en forme de U ouvert, comprenant deux flasques 122 sensiblement parallèles l'une à l'autre, et un fond 124 de liaison des flasques 122, perpendiculaire aux flasques 122. La section du corps 120 est sensiblement complémentaire de celle de la poutre 59. Le fond 124 est en appui contre un côté de la poutre 59 opposé à celui contre lequel la plaque 112 est en appui.

La platine 116 comprend également deux langues 126 sensiblement parallèles au fond 124 et faisant saillie vers l'extérieur de la platine 116 depuis les extrémités des flasques 122 opposées au fond 124. Chaque langue 126 affleure le côté de la poutre 59 contre lequel la plaque 112 est en appui, et est elle-même en appui contre la plaque 112. Chaque langue 126 présente des orifices traversant 128 pour le passage d'organes de fixation du dispositif de mise en vibration 110 à la platine 116.

Ainsi, lorsque le dispositif 110 est fixé à la platine 116, la plaque 112 et le corps 120 définissent ensemble un contour fermé de section sensiblement complémentaire de celle de la poutre 59. Cette section étant carrée, le dispositif 110 ne peut pas tourner autour de l'axe de la poutre 59.

Ce mode de fixation du dispositif 110 à la poutre 59 permet de varier l'orientation du dispositif de mise en vibration 110 en fonction de l'espace disponible autour du dispositif racleur 2. Il est en particulier possible de fixer le dispositif de mise en vibration 110 de manière à ce que le carter 114 s'étende transversalement, comme dans la variante de la Figure 1, ou longitudinalement, comme dans la variante de la Figure 2.

En référence à la Figure 6, le convoyeur 1 comprend également un moteur 130 d'entraînement de la bande 3, un premier circuit électrique 132 d'alimentation du moteur 130, un deuxième circuit électrique 134 d'alimentation du dispositif de mise en vibration 110, et une source 136 d'énergie électrique commune aux deux circuits 132, 134.

Le moteur d'entraînement 130 est un moteur électrique. Il comprend un arbre de sortie 140. Une liaison 142, dans l'exemple représenté une liaison par courroie, permet de transmettre le mouvement de rotation de l'arbre 140 à l'un des rouleaux de retournement 4A, dans l'exemple représenté au second rouleau de retournement 4A.

Les circuits électriques 132, 134 sont raccordés électriquement à la source 136 par l'intermédiaire d'un commutateur 144 commun aux deux circuits électriques 132, 134. Les circuits électriques 132, 134 sont tous deux commandés par ce commutateur commun 144. Ainsi, le moteur 130 et le dispositif de mise en vibration 110 sont toujours activés simultanément.

En particulier, le deuxième circuit électrique 134 est une dérivation du premier circuit électrique 132. En d'autres termes, le dispositif de mise en vibration 110 est branché électriquement au premier circuit électrique 132 de manière à être en parallèle du moteur 130. Ainsi, le branchement du dispositif de mise en vibration 110 au réseau électrique préalablement existant du convoyeur 1 est facilité. En outre, la maintenance du dispositif de mise en vibration 110 est rendue plus aisée.

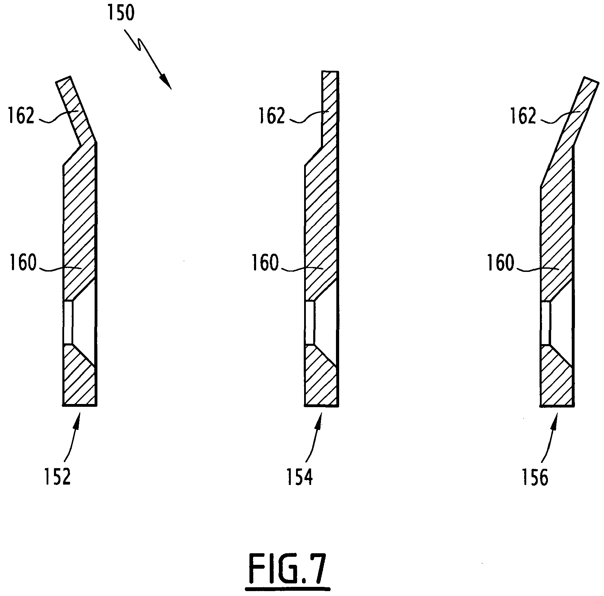

En référence à la Figure 7, un kit 150 de plaquettes d'usure de rechange 152, 154, 156 accompagne le dispositif racleur 2. Ces plaquettes de rechange 152, 154, 156 sont destinées à remplacer les plaquettes d'usure 17 du dispositif racleur 2 lorsque ces dernières sont usées.

De même que chaque plaquette d'usure 17, chaque plaquette de rechange 152, 154, 156 comprend une partie inférieure 160, sensiblement plane, de fixation à la plaque 15, et une partie supérieure 162, sensiblement plane, destinée à être au contact de la bande 3. La partie inférieure 160 de chacune des plaquettes de rechange 152, 154, 156 est identique à la partie inférieure 25 de chacune des plaquettes d'usure 17.

Une plaquette de rechange 152 d'un premier type est convexe. En d'autres termes, elle est incurvée de sorte que la partie supérieure 162 soit inclinée vers l'aval relativement à la partie inférieure 160 lorsque la plaquette de rechange 152 est fixée au dispositif racleur 2. L'angle entre les parties 160 et 162 vaut environ 170°. La plaquette de rechange 152 est identique aux plaquettes d'usure 17 du dispositif racleur 2.

Une plaquette de rechange 154 d'un deuxième type est droite. En d'autres termes, l'angle entre les parties 160 et 162 vaut environ 180 °.

Une plaquette de rechange 156 d'un troisième type est concave. En d'autres termes, elle est incurvée de sorte que la partie supérieure 162 soit inclinée vers l'amont relativement à la partie inférieure 160 lorsque la plaquette de rechange 156 est fixée au dispositif racleur 2. L'angle entre les parties 160 et 162 vaut environ 170°.

On notera que bien qu'une seule plaquette de chaque type ait été représentée sur la Figure 7, le kit 150 comprend de préférence autant de plaquettes 152, 154, 156 de chaque type que le dispositif racleur 2 de plaquettes d'usure 17. Les plaquettes de rechange de chaque type sont toutes identiques les unes aux autres.

Il est ainsi possible de changer la forme des organes racleurs 7, en leur conférant au choix une forme incurvée vers l'aval, droite ou incurvée vers l'amont.

Le fonctionnement du convoyeur 1 décrit ci-dessus va maintenant être détaillé. Les montants 45 sont fixés sur une structure rigide reposant sur le sol.

La position transversale de l'âme de support 37 par rapport au montant 35 est ajustable en déplaçant les poutres creuses 59 par rapport aux membres centraux 69 des deux ensembles de support. Une fois cette position transversale ajustée, on serre la vis 77, de manière à bloquer les poutres 59 transversalement par rapport aux montants 45.

Pour utiliser le dispositif racleur 2, on sollicite en rotation l'âme de support 37 autour de l'axe transversal Y, de manière que les plaquettes d'usure 17 viennent porter avec un couple déterminé contre la bande transporteuse 3. Pour ce faire, on visse par exemple l'écrou 89 situé le plus haut dans un sens tel que la tige filetée 85 tire l'extrémité correspondante 83 du feuillard vers le montant 45. Parallèlement, on peut faire tourner l'écrou 89 situé le plus bas en sens inverse. Ceci a pour effet que le feuillard 75 se déplace autour de l'axe Y dans le sens anti horaire sur la Figure 5. Le membre tubulaire 71 est ainsi entraîné en rotation autour de l'axe Y. Cette sollicitation est transmise par le matériau élastique 73 au membre central 69 et à la poutre 59. La poutre 59 est rigidement fixée à l'âme de support, et entraîne à son tour l'âme de support 37 en rotation.

Le commutateur 144 est ensuite actionné pour alimenter électriquement le moteur 130 et le dispositif de mise en vibration 110. La bande 3 commence à se déplacer et les organes racleurs 7 entrent en vibration. Grâce à cette vibration, les résidus de matériau transporté qui sont raclés par les organes racleurs 7 se détachent des organes racleurs 7.

Quand il est nécessaire de changer les plaquettes d'usure 17, on effectue le mouvement inverse de l'âme de support 37. L'écrou supérieur 89 est tourné dans un sens tel que l'extrémité 83 correspondante du feuillard est déplacée dans le sens d'un écartement par rapport au montant 45, et l'écrou inférieur 89 dans le sens inverse. On écarte ainsi les plaquettes d'usure 17 de la bande 3. Les vis 28 sont ensuite dévissées et les plaquettes 17 sont séparées des plaques 15.

On choisit ensuite dans le kit de plaquettes 150 un type de plaquettes de rechange pour remplacer les plaquettes d'usure 17. Les plaquettes de rechange du type choisi sont ensuite mises en place et les vis 28 sont revissées dans les écrous 27.

Grâce à l'invention décrite ci-dessus, le raclage de la bande 3 est amélioré. Cela est en particulier obtenu grâce à la forme incurvée des organes racleurs 7, et à la mise en vibration desdits organes racleurs 7, qui évite l'adhérence des résidus de matériau transporté aux organes racleurs 7.

En outre, le dispositif racleur 2 a un encombrement limité.

Enfin, la maintenance du dispositif racleur 2 est particulièrement aisée.

## Revendications

1. Dispositif racleur (2) pour une bande transporteuse (3) circulant longitudinalement, le dispositif racleur (2) comprenant une structure porteuse (5), au moins un organe racleur (7) destiné à venir en contact avec la bande transporteuse (3), et au moins un dispositif (110) de mise en vibration du ou de chaque organe racleur (7), la structure porteuse (5) comprenant une âme (37) de support du ou de chaque organe racleur (7) et deux ensembles de support (35) disposés transversalement de part et d'autre de l'âme (37),
**caractérisé en ce que** chaque ensemble de support (35) comprend une poutre transversale (59) de liaison à l'âme (37) et un montant fixe (45) auquel est articulé la poutre transversale (59), le ou chaque dispositif de mise en vibration (110) étant fixé à la poutre transversale (59) d'au moins un des ensembles de support (35).

2. Dispositif racleur (2) selon la revendication 1, dans lequel le ou chaque dispositif de mise en vibration (110) est un vibrateur électrique à balourds, de préférence un micro vibrateur électrique à balourds.

3. Dispositif racleur (2) selon la revendication 1 ou 2, dans lequel la poutre transversale (59) de chaque ensemble de support (35) comprend un tronçon intérieur (62A) s'étendant entre l'âme (37) et le montant (45) et un tronçon extérieur (62B) s'étendant depuis le montant (45) à l'opposée du tronçon intérieur (62A), le ou chaque dispositif de mise en vibration (110) étant fixé audit tronçon extérieur (62B).

4. Dispositif racleur (2) selon l'une quelconque des revendications précédentes, dans lequel la poutre transversale (59) d'au moins un des ensembles de support (35) porte une platine (116) de fixation du ou de chaque dispositif de mise en vibration (110).

5. Dispositif racleur (2) selon l'une quelconque des revendications précédentes, dans lequel la poutre transversale (59) est liée à l'âme (37) par une liaison démontable (61).

6. Dispositif racleur (2) selon l'une quelconque des revendications précédentes, dans lequel les dispositifs de mise en vibration (110) sont au moins deux, un premier dispositif de mise en vibration étant fixé à l'un des ensembles de support (35), le deuxième dispositif de mise en vibration étant fixé à l'autre ensemble de support (35).

7. Dispositif racleur (2) selon l'une quelconque des revendications précédentes, dans lequel le ou chaque organe racleur (7) est incurvé autour d'un axe sensiblement horizontal et transversal, vers l'aval.

8. Dispositif racleur (2) selon l'une quelconque des revendications précédentes, dans lequel le ou chaque organe racleur (7) comporte une plaque de support (15) solidaire de la structure porteuse (5), une plaquette d'usure (17) et une liaison (19) démontable de la plaquette d'usure (17) à la plaque de support (15), la plaquette d'usure (17) comprenant une partie (25) de fixation à la plaque de support (15), et une partie (27) destinée à venir en contact avec la bande transporteuse (3).

9. Ensemble comprenant un dispositif racleur (2) selon la revendication 8, et un kit (150) de plaquettes d'usure de rechange (152, 154, 156), **caractérisé en ce que** le kit (150) comprend au moins une plaquette d'usure droite (154), une plaquette d'usure concave (156) et une plaquette d'usure convexe (152).

10. Convoyeur comprenant une bande transporteuse (3) et un dispositif racleur (2) selon l'une quelconque des revendications 1 à 8.

11. Convoyeur selon la revendication 10, comprenant un moteur électrique (130) d'entraînement de la bande transporteuse (3), un premier circuit électrique (132) d'alimentation du moteur d'entraînement (130), et un deuxième circuit électrique (134) d'alimentation du ou de chaque dispositif de mise en vibration (110), dans lequel les premier et deuxième circuits électriques d'alimentation (132, 134) sont commandés par un commutateur (144) commun au deux circuits électriques d'alimentation (132, 134).

## Patentansprüche

1. Abstreifvorrichtung (2) für ein längs zirkulierendes Transportband (3), wobei die Abstreifvorrichtung (2) eine tragende Struktur (5), mindestens ein Abstreiforgan (7), das bestimmt ist, mit dem Transportband (3) in Kontakt zu kommen, und mindestens eine Vorrichtung (110) zum Invibrationversetzen des oder jedes Abstreiforgans (7) umfasst, wobei die tragende Struktur (5) einen Trägerkern (37) des oder jedes Abstreiforgans (7) und zwei transversal auf der einen und der anderen Seite des Kerns (37) angeordnete Trägereinheiten (35) umfasst,
**dadurch gekennzeichnet, dass** jede Trägereinheit (35) einen transversalen Verbindungsbalken (59) mit dem Kern (37) und einen festen Ständer (45) umfasst, an dem der transversale Balken (59) angelenkt ist, wobei die oder jede Vorrichtung zum Invibrationversetzen (110) am transversalen Balken (59) mindestens einer der Trägereinheiten (35) befestigt ist.

2. Abstreifvorrichtung (2) nach Anspruch 1, wobei die oder jede Vorrichtung zum Invibrationversetzen (110) ein elektrischer Vibrator mit Unwuchten, vorzugsweise ein elektrischer Mikrovibrator mit Unwuchten, ist.

3. Abstreifvorrichtung (2) nach Anspruch 1 oder 2, wobei der transversale Balken (59) jeder Trägereinheit (35) einen inneren Abschnitt (62A), der sich zwischen dem Kern (37) und dem Ständer (45) erstreckt, und einen äußeren Abschnitt (62B), der sich ab dem Ständer (45) gegenüber dem inneren Abschnitt (62A) erstreckt, umfasst, wobei die oder jede Vorrichtung zum Invibrationversetzen (110) am äußeren Abschnitt (62B) befestigt ist.

4. Abstreifvorrichtung (2) nach einem der vorangehenden Ansprüche, wobei der transversale Balken (59) mindestens einer der Trägereinheiten (35) eine Befestigungsplatte (116) der oder jeder Vorrichtung zum Invibrationversetzen (110) trägt.

5. Abstreifvorrichtung (2) nach einem der vorangehenden Ansprüche, wobei der transversale Balken (59) mit dem Kern (37) anhand einer demontierbaren Verbindung (61) verbunden ist.

6. Abstreifvorrichtung (2) nach einem der vorangehenden Ansprüche, wobei die Vorrichtungen zum Invibrationversetzen (110) mindestens zwei sind, wobei eine erste Vorrichtung zum Invibrationversetzen an einer der Trägereinheiten (35) befestigt ist, wobei die zweite Vorrichtung zum Invibrationversetzen an der anderen Trägereinheit (35) befestigt ist.

7. Abstreifvorrichtung (2) nach einem der vorangehenden Ansprüche, wobei das oder jedes Abstreiforgan (7) um eine etwa horizontale und transversale Achse rückwärts gekrümmt ist.

8. Abstreifvorrichtung (2) nach einem der vorangehenden Ansprüche, wobei das oder jedes Abstreiforgan (7) eine mit der tragenden Struktur (5) fest verbundene Trägerplatte (15), eine Verschleißplatte (17) und eine demontierbare Verbindung (19) der Verschleißplatte (17) mit der Trägerplatte (15) aufweist, wobei die Verschleißplatte (17) einen Befestigungsteil (25) mit der Trägerplatte (15) und einen Teil (27), der bestimmt ist, mit dem Transportband (3) in Kontakt zu kommen, umfasst.

9. Einheit, die eine Abstreifvorrichtung (2) nach Anspruch 8 und ein Set (150) von Austausch-Verschleißplatten (152, 154, 156) umfasst, **dadurch gekennzeichnet, dass** das Set (150) mindestens eine gerade Verschleißplatte (154), eine konkave Verschleißplatte (156) und eine konvexe Verschleißplatte (152) umfasst.

10. Förderer, der ein Transportband (3) und eine Abstreifvorrichtung (2) nach einem der Ansprüche 1 bis 8 umfasst.

11. Förderer nach Anspruch 10, umfassend eine elektrischen Antriebsmotor (130) des Transportbands (3), einen ersten Versorgungsstromkreis (132) des Antriebsmotors (130) und einen zweiten Versorgungsstromkreis (134) der oder jeder Vorrichtung zum Invibrationversetzen (110), wobei der erste und zweite Versorgungsstromkreis (132, 134) von einem Schalter (144) gesteuert sind, der beiden Versorgungsstromkreisen (132, 134) gemeinsam ist.

## Claims

1. A scraping device (2) for a conveyor belt (3) traveling longitudinally, the scraping device (2) comprising a support structure (5), at least one scraping member (7) designed to come into contact with the conveyor belt (3), and at least one device (110) for inducing vibration of the or each scraping member (7), the support structure (5) comprising a support core (37) for the or each scraping member (7) and two support assemblies (35) positioned transversely on either side of the core (37),
**characterized in that** each support assembly (35) comprises a crossbeam (59) for connecting to the core (37) and a stationary upright (45) to which the crossbeam (59) is articulated, the or each vibration-inducing device (110) being fixed to the crossbeam (59) of at least one of the support assemblies (35).

2. The scraping device (2) according to claim 1, wherein the or each vibration-inducing device (110) is an unbalanced electric vibrator, preferably an unbalanced electric micro-vibrator.

3. The scraping device (2) according to claim 1 or 2, wherein the crossbeam (59) of each support assembly (35) comprises an inner segment (62A) extending between the core (37) and the upright (45) and an outer segment (62B) extending from the upright (45) opposite the inner segment (62A), the or each vibration-inducing device (110) being fastened to said outer segment (62B).

4. The scraping device (2) according to any one of the preceding claims, wherein the crossbeam (59) of at least one of the support assemblies (35) bears a platen (116) for fastening the or each vibration-inducing device (110).

5. The scraping device (2) according to any one of the preceding claims, wherein the crossbeam (59) is connected to the core (37) by a removable link (61).

6. The scraping device (2) according to any one of the preceding claims, wherein there are at least two vibration-inducing devices (110), a first vibration-inducing device being fixed to one of the support assemblies (35), the second vibration-inducing device being fixed to the other support assembly (35).

7. The scraping device (2) according to any one of the preceding claims, wherein the or each scraping member (7) is curved around a substantially horizontal and transverse axis, in the downstream direction.

8. The scraping device (2) according to any one of the preceding claims, wherein the or each scraping member (7) includes a support plate (15) integral with the support structure (5), a wear plate (17) and a link (19) able to be disassembled from the wear plate (17) at the support plate (15), the wear plate (17) comprising a part (25) for fastening to the support plate (15), and a part (27) designed to come into contact with the conveyor belt (3).

9. An assembly comprising a scraping device (2) according to claim 8, and a kit (150) of spare wear plates (152, 154, 156), **characterized in that** the kit (150) comprises at least one straight wear plate (154), one concave wear plate (156) and one convex wear plate (152).

10. A conveyor comprising a conveyor belt (3) and a scraping device (2) according to any one of claims 1 to 8.

11. The conveyor according to claim 10, comprising an electric motor (130) for driving the conveyor belt (3), a first power circuit (132) of the drive motor (130), and a second power circuit (134) for the or each vibration-inducing device (110), wherein the first and second power circuits (132, 134) are controlled by a switch (144) shared by the two power circuits (132, 134).
